# FASCICULE DE BREVET EUROPEEN

(11) **EP 2 132 066 B1**
(45) Date de publication et mention de la délivrance du brevet: **30.03.2011**
(21) Numéro de dépôt: 08717700.2
(22) Date de dépôt: 12.03.2008
(51) Int. Cl.: B60S 1/34

(54) **BRAS PORTE-BALAI A CINEMATIQUE PANTOGRAPHE POUR VITRE DE VEHICULE AUTOMOBILE**
WISCHERTRAGARM MIT SCHERENKINEMATIK FÜR EIN KRAFTFAHRZEUGFENSTER
BRUSH BEARING ARM WITH PANTOGRAPH KINEMATICS FOR THE WINDOW OF AN AUTOMOTIVE VEHICLE

(30) Priorité: 16.03.2007 FR 0701938
(43) Date de publication de la demande: 16.12.2009
(73) Titulaire: Valeo Systèmes d'Essuyage, 78321 La Verrière (FR)
(72) Inventeur: CATHALA, Franck, F-81170 St Martin Laguepie (FR); GUERNALEC, Stevan, Tang Zhen (CN); GRANDJEAN, Denis, F-78660 Ablis (FR)
(86) Numéro de dépôt international: PCT/EP2008/052954
(87) Numéro de publication internationale: WO 2008/113732

(56) Documents cités:
- FR-A- 2 777 248
- US-A- 3 247 540
- US-A- 5 384 932
- US-A- 5 634 234

## Description

La présente invention concerne un bras porte-balai à cinématique pantographe, particulièrement adapté à l'essuyage d'un pare-brise de surface complexe, tel qu'un pare-brise panoramique.

Un pare-brise est dit panoramique notamment lorsqu'il comprend des portions d'extrémités latérales qui reviennent sur les cotés du véhicule, et présente donc de chaque coté une zone de très forte courbure.

Pour ce type de pare-brise, le problème qui se pose est de pouvoir essuyer efficacement non seulement la face avant du vitrage, généralement à faible courbure, mais aussi ces portions d'extrémités latérales à très forte courbure.

Un facteur d'optimisation de la qualité d'essuyage consiste à augmenter la surface du pare-brise effectivement balayée par le balai d'essuyage.

Les essuie-glaces comportant un bras porte-balai à cinématique dite pantographe sont connus pour offrir une surface de balayage maximale. En effet, grâce à la cinématique pantographe, il est possible d'imprimer au balai d'essuyage, porté par le bras, un mouvement de déplacement non circulaire sur au moins certaines portions du pare-brise (notamment les portions d'extrémités latérales), contrairement à des essuie-glaces classiques pour lesquels la trajectoire décrite par le balai d'essuyage est purement circulaire sur toute la surface du pare-brise. Dans les essuie-glaces connus de type pantographe, le bras porte-balai comporte généralement:
- une tige principale portant le dispositif d'accrochage du balai à l'une de ses extrémités, la tige principale étant mobile en rotation, grâce à un arbre d'entraînement en rotation d'un moteur électrique permettant un mouvement de balayage alterné, autour d'un axe de pivotement principal passant par l'autre extrémité; et
- une tige secondaire, mobile en rotation autour d'un axe de pivotement secondaire parallèle mais distinct de l'axe principal.

Du côté de l'extrémité de la tige principale portant le dispositif d'accrochage du balai, les tiges principale et secondaire sont en outre reliées entre elles par un mécanisme de liaison, typiquement une biellette reliée à chacune de ses extrémités respectivement à la tige principale et à la tige secondaire par l'intermédiaire de deux articulations, notamment deux pivots d'axes parallèles entre eux, de manière à former, avec la caisse du véhicule, un quadrilatère déformable appelé pantographe. Le balai est fixé à un point d'accroche du dispositif d'accrochage de préférence solidaire de la biellette, et peut présenter de ce fait une orientation par rapport aux tiges principale et secondaire qui varie en fonction de la position angulaire relative de ces tiges lors de leur mouvement de rotation autour de leur axe de pivotement respectif. Comme la position angulaire relative des tiges principale et secondaire est elle-même fonction de la zone du pare-brise dans laquelle on se situe, et donc de la position angulaire de l'arbre d'entraînement, il en résulte que le bras à cinématique pantographe décrit ci-dessus permet de faire varier l'orientation du balai en fonction de la position angulaire de l'arbre d'entraînement.

Le document US 5384932A décrit un bras porte-balai selon le préambule de la revendication 1.

Un inconvénient du bras à cinématique pantographe réside dans le fait qu'il présente un encombrement important au niveau du mécanisme de liaison et du système d'accrochage, à la fois en largeur (ou plus précisément dans un plan parallèle localement au pare-brise), et en hauteur (ou plus précisément dans un plan perpendiculaire localement au pare-brise). Il en résulte un problème de confort de vision pour le conducteur du véhicule et pour son passager, et ce, que le bras porte-balai soit en fonctionnement, ou lorsqu'il occupe sa position dite de repos ou de mise au parking. Du fait de l'encombrement en largeur, le conducteur et le passager voient toujours très distinctement les deux tiges principale et secondaire ainsi que le balai, et ce, quelle que soit la position occupée par le bras porte-balai. L'encombrement en hauteur est quant à lui essentiellement dû au fait que, quelle que soit la position occupée par le bras, les tiges principale et secondaire d'une part, et le système d'accrochage et le balai d'autre part, sont superposés selon une direction parallèle à la normale du pare-brise.

Le problème d'encombrement, notamment en largeur, est encore plus pénalisant dans le cas des véhicules automobiles équipés de deux bras d'essuyage à cinématique pantographe.

La présente invention a pour but de proposer un bras porte-balai à cinématique pantographe d'encombrement réduit.

Pour ce faire, la présente invention a pour objet un bras porte-balai à cinématique pantographe comprenant une tige principale portant, du côté de l'une de ses extrémités, un dispositif d'accrochage d'un balai d'essuyage et destinée à être entraînée en rotation alternée autour d'un axe de balayage par un arbre d'entraînement d'un dispositif moteur, et une tige secondaire reliée à la tige principale par un mécanisme de liaison comportant une première articulation sur un point d'articulation de la tige principale, et une deuxième articulation sur un point d'articulation de la tige secondaire de façon à autoriser une variation de l'orientation du balai d'essuyage en fonction de la position angulaire dudit arbre d'entraînement, tel que la zone d'accroche du balai d'essuyage sur le dispositif d'accrochage est située entre le point d'articulation de la tige principale et le point d'articulation de la tige secondaire, de sorte que, lorsque le bras porte-balai est en position de repos, le dispositif d'accrochage et le balai d'essuyage sont alignés dans l'axe de la tige principale, caractérisé en ce que la tige principale présente une forme et des dimensions en hauteur et en largeur telles que, dans ladite position de repos, l'ensemble constitué du mécanisme de liaison et du dispositif d'accrochage se retrouve intégré dans la largeur, et au moins partiellement dans la hauteur de la tige principale.

De préférence, le bras peut comporter une pièce de style formant cache, intégrée à l'extrémité de la tige principale pour recouvrir le mécanisme de liaison et le dispositif d'accrochage. Ceci est un avantage par rapport aux bras de l'art antérieur dans lesquels les pièces de style sont en général des pièces rapportées, par exemple clipsées sur le dispositif d'accrochage, qui peuvent ainsi être perdues.

Dans une réalisation possible selon l'invention, la première articulation et la deuxième articulation comportent deux pivots d'axes parallèles entre eux et orthogonaux à l'axe de la tige principale.

En variante, seule la première articulation comporte un pivot d'axe orthogonal à l'axe de la tige principal, alors que la deuxième articulation comporte une rotule d'axe orthogonal à l'axe dudit pivot.

Dans ce cas, le bras peut comporter en outre un système de correction de l'angle d'attaque du balai.

Selon un premier mode de réalisation, lorsque le bras est dans sa position de repos, la tige secondaire est disposée sur la tranche, le long de la tige principale.

Selon un second mode de réalisation, lorsque le bras est en position de repos, la tige secondaire est intégrée dans la largeur, et au moins partiellement dans la hauteur de la tige principale.

D'autres caractéristiques et avantages de l'invention seront mieux compris au vu de la description suivante de deux exemples de réalisation non limitatifs d'un bras porte balai conforme à l'invention, faite en référence aux figures annexées, dans lesquelles:
- La figure 1a est une vue en perspective d'un bras porte-balai selon un premier mode de réalisation possible conforme à l'invention ;
- La figure 1b est une vue de dessous partielle du bras porte-balai de la figure 1a;
- Les figures 1c et 1d sont des vues en perspective respectivement de dessus et de dessous d'une partie du bras porte-balai de la figure 1a;
- La figure 1e est une vue en perspective éclatée du bras porte-balai de la figure 1 a ;
- La figure 2a est une vue partielle en perspective d'un bras porte-balai selon un deuxième mode de réalisation possible conforme à l'invention ;
- Les figures 2c et 2d sont des vues respectivement de dessus et de dessous d'une partie du bras porte-balai de la figure 2a.

Pour faciliter la compréhension, les éléments communs à l'ensemble des figures portent les mêmes références. Pour les deux modes de réalisation qui vont être décrits, le bras porte-balai est toujours représenté dans sa position repliée, qui correspond à la position de repos ou de mise au parking lorsque le bras est monté sur le véhicule automobile.

En référence aux figures la à le, un bras 1 porte-balai à cinématique pantographe selon un premier mode de réalisation possible de l'invention comporte classiquement une tige principale 10 et une tige secondaire 40. Ces deux tiges sont destinées à être entraînées en rotation alternée autour de leur axe de pivotement respectif 2 et 3 par un arbre d'entraînement d'un dispositif moteur non représenté. La tige principale 10 porte, du côté de l'une de ses extrémités, un dispositif 20 d'accrochage d'un balai d'essuyage 30. Sur ce même côté, la tige secondaire 40 est reliée à la tige principale 10 par un mécanisme de liaison 21 comportant une première articulation 11 sur un point d'articulation de la tige principale 10, et une deuxième articulation 41 sur un point d'articulation de la tige secondaire 40. Le dispositif d'accrochage 20 est en outre solidaire du mécanisme de liaison 21. Ainsi, le mécanisme de liaison 21, avec ses deux articulations, autorise une variation de l'orientation du balai d'essuyage en fonction de la position angulaire dudit arbre d'entraînement. Selon une première caractéristique de l'invention, le bras 1 est tel que la zone d'accroche 22 du balai d'essuyage 30 sur le dispositif 20 d'accrochage est située entre le point d'articulation de la tige principale 10 au niveau de la première articulation 11, et le point d'articulation de la tige secondaire 40 au niveau de la deuxième articulation 41, de sorte que, lorsque le bras 1 porte-balai est en position de repos, le dispositif 20 d'accrochage et le balai d'essuyage 30 se retrouvent alignés dans l'axe de la tige principale 10, comme le montrent les différentes figures.

En outre, selon une deuxième caractéristique de l'invention, la tige principale 10 présente une forme et des dimensions en hauteur et en largeur telles que, dans la position de repos, l'ensemble constitué du mécanisme de liaison 21 et du dispositif d'accrochage 20 se retrouve intégré dans la largeur, et au moins partiellement dans la hauteur de la tige principale 10. Ainsi, le balai d'essuyage 30 se retrouve également, sur une partie de sa longueur, intégré dans la largeur de la tige principale 10.

Il en résulte un encombrement réduit tant en hauteur qu'en largeur lorsque le bras est en position de repos.

Bien entendu, lorsque le bras est en fonctionnement, l'ensemble constitué du mécanisme de liaison 21, du dispositif d'accrochage 20 et du balai 30 ne va plus être forcément aligné avec la tige principale, selon les variations d'orientation du balai. Néanmoins, l'encombrement en hauteur reste réduit.

Grâce à la disposition précédente, on peut prévoir de manière avantageuse, d'intégrer une pièce de style 12 formant cache à l'extrémité de la tige principale 10 pour recouvrir le mécanisme de liaison 21 et le dispositif d'accrochage 20. Par rapport aux bras de l'art antérieur, cette pièce de style intégrée est donc imperdable.

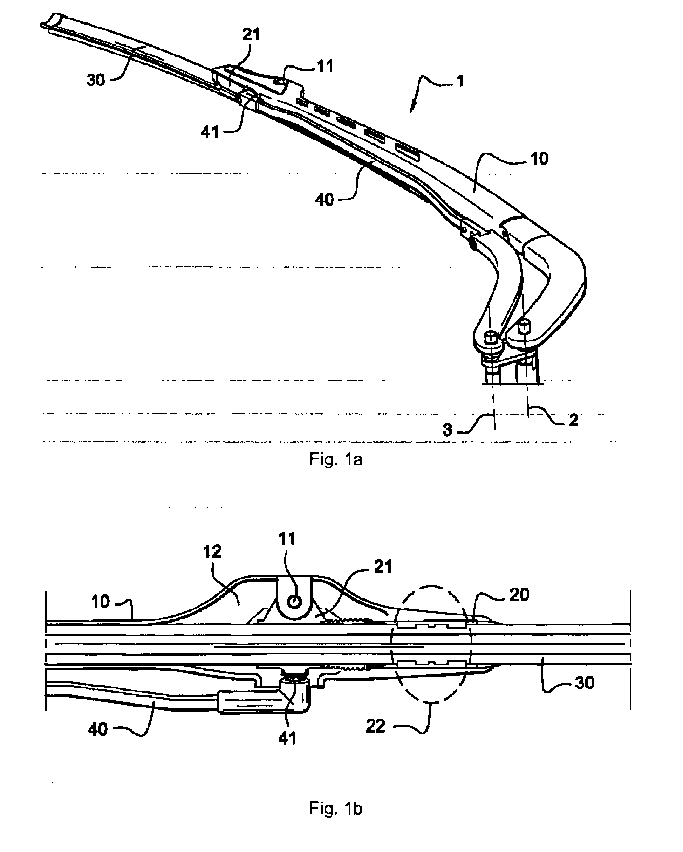

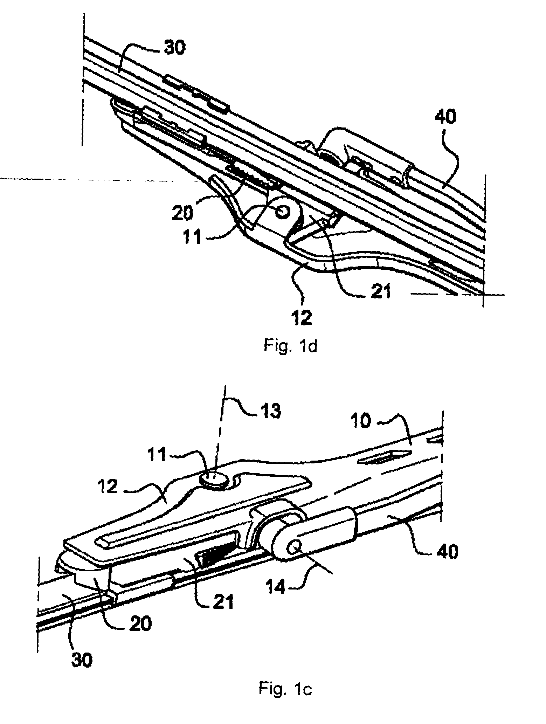

Au niveau des articulations utilisées pour le mécanisme de liaison, il est possible d'utiliser deux pivots d'axes parallèles entre eux. En variante, comme le montrent les figures la à 1d, et plus particulièrement la figure 1c, la première articulation 11 est un pivot d'axe 13 sensiblement orthogonal à la direction longitudinale de la tige principale 10, alors que la deuxième articulation 41 comporte une rotule d'axe 14 orthogonal à l'axe du pivot de la première articulation 11. Cette disposition particulière de l'axe de la rotule permet notamment de placer la tige secondaire 40 sur la tranche, le long de la tige principale 10, ce qui contribue encore à la réduction en largeur du bras. En outre, l'utilisation d'une rotule donne un degré de liberté supplémentaire qui permet de rendre le bras compatible avec un système optionnel (non représenté) de correction de l'angle d'attaque du balai permettant de faire varier l'inclinaison du balai au niveau de son point de liaison avec le bras porte-balai par rapport à la normale à la surface du pare-brise en fonction de la zone du pare-brise dans laquelle on se trouve.

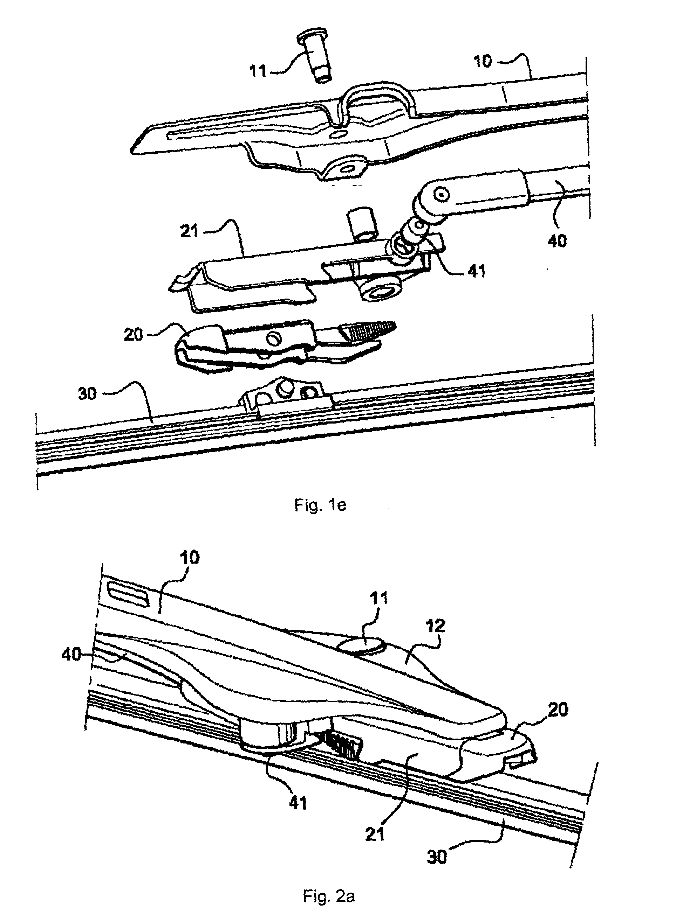

Dans l'exemple qui vient d'être décrit, les formes et dimensions des éléments sont particulièrement adaptées pour contribuer à la réduction de l'encombrement en hauteur. Ces formes sont particulièrement visibles sur la figure 1e. Ainsi, le dispositif d'accrochage 20 vient s'imbriquer dans une large mesure, de préférence intégralement, dans la hauteur du mécanisme de liaison 21, lequel vient s'imbriquer également, de préférence intégralement, dans la hauteur de la tige principale 10.

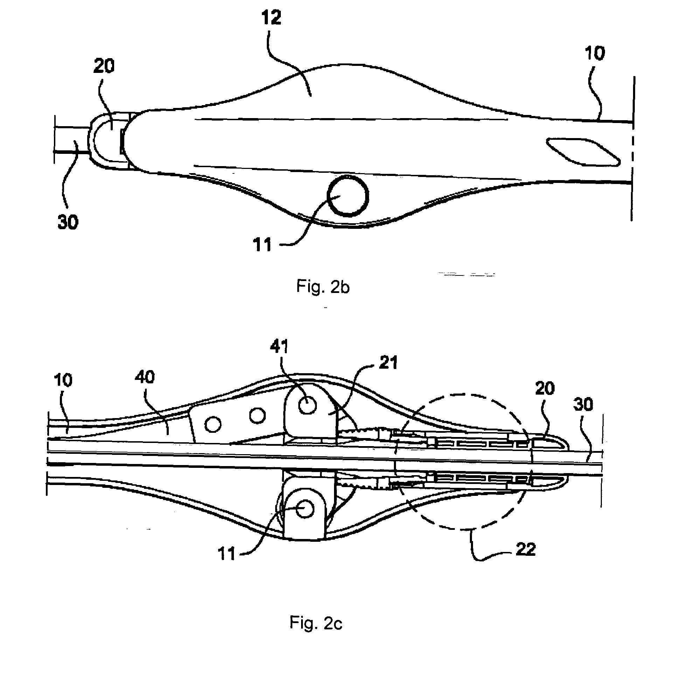

Les figures 2a à 2c illustrent un deuxième mode de réalisation d'un bras à cinématique pantographe conforme à l'invention, dans lequel l'encombrement en largeur a encore été réduit.

Tout comme dans le premier mode de réalisation décrit précédemment, la zone d'accroche 22 du balai d'essuyage 30 sur le dispositif 20 d'accrochage est située entre le point d'articulation de la tige principale 10 au niveau de la première articulation 11, et le point d'articulation de la tige secondaire 40 au niveau de la deuxième articulation 41, de sorte que, lorsque le bras 1 porte-balai est en position de repos, le dispositif 20 d'accrochage et le balai d'essuyage 30 se retrouvent alignés dans l'axe de la tige principale 10.

En outre, la tige principale 10 présente une forme et des dimensions en hauteur et en largeur telles que, dans la position de repos, l'ensemble constitué du mécanisme de liaison 21 et du dispositif d'accrochage 20 se retrouve intégré dans la largeur, et au moins partiellement dans la hauteur de la tige principale 10. Ainsi, le balai d'essuyage 30 se retrouve également, sur une partie de sa longueur, intégré dans la largeur de la tige principale 10.

Enfin, de manière différente par rapport au premier mode de réalisation décrit, la tige secondaire 40 est telle, qu'en position de repos, elle se retrouve également intégrée dans la largeur, et au moins partiellement dans la hauteur de la tige principale 10. Il en résulte un encombrement particulièrement optimisé tant en hauteur qu'en largeur lorsque le bras est en position de repos.

En terme de style, on obtient un bras à cinématique pantographe très effilé, avec un encombrement très proche d'un bras d'essuyage classique. Ceci se traduit par une amélioration du confort de conduite pour le conducteur, que le bras soit ou non en fonctionnement.

Dans l'exemple décrit du deuxième mode de réalisation, les deux articulations 11 et 41 sont des pivots d'axes parallèles entre eux, et orthogonaux à la direction de la tige principale 10. En variante, on pourrait envisager, pour la liaison 41, d'utiliser une rotule d'axe orthogonal au pivot de la première articulation 11. On obtient alors un degré de liberté supplémentaire permettant de rendre le bras compatible avec un système optionnel de correction de l'angle d'attaque du balai.

## Revendications

1. Bras (1) porte-balai à cinématique pantographe comprenant une tige principale (10) portant, du côté de l'une de ses extrémités, un dispositif (20) d'accrochage d'un balai d'essuyage (30) et destinée à être entraînée en rotation alternée autour d'un axe de balayage par un arbre d'entraînement d'un dispositif moteur, et une tige secondaire (40) reliée à la tige principale par un mécanisme de liaison (21) comportant une première articulation (11) sur un point d'articulation de la tige principale (10), et une deuxième articulation (41) sur un point d'articulation de la tige secondaire (40) de façon à autoriser une variation de l'orientation du balai d'essuyage en fonction de la position angulaire dudit arbre d'entraînement, tel que la zone d'accroche (22) du balai d'essuyage (30) sur le dispositif (20) d'accrochage est située entre le point d'articulation de la tige principale (10) et le point d'articulation de la tige secondaire (40), de sorte que, lorsque le bras (1) porte-balai est en position de repos, le dispositif (20) d'accrochage et le balai d'essuyage (30) sont alignés dans l'axe de la tige principale (10), **caractérisé en ce que** la tige principale (10) présente une forme et des dimensions en hauteur et en largeur telles que, dans ladite position de repos, l'ensemble constitué du mécanisme de liaison (21) et du dispositif d'accrochage (20) se retrouve intégré dans la largeur, et au moins partiellement dans la hauteur de la tige principale (10).

2. Bras (1) porte-balai selon la revendication 1, **caractérisé en ce qu'**il comporte une pièce de style (12) formant cache intégrée à l'extrémité de la tige principale (10) pour recouvrir le mécanisme de liaison (21) et le dispositif d'accrochage (20).

3. Bras (1) porte-balai selon l'une quelconque des revendications précédentes, **caractérisé en ce que** la première articulation (11) et la deuxième articulation (41) comportent deux pivots d'axes parallèles entre eux et orthogonaux à l'axe de la tige principale (10).

4. Bras (1) porte-balai selon l'une quelconque des revendications 1 à 2, **caractérisé en ce que** la première articulation (11) comporte un pivot d'axe (13) orthogonal à l'axe de la tige principal (10) et **en ce que** la deuxième articulation (41) comporte une rotule d'axe (14) orthogonal à l'axe (13) dudit pivot.

5. Bras (1) porte-balai selon la revendication 4, **caractérisé en ce que**, la tige secondaire (40) est disposée sur la tranche, le long de la tige principale (10).

6. Bras (1) porte-balai selon l'une quelconque des revendications 4 à 5, **caractérisé en ce qu'**il comporte un système de correction de l'angle d'attaque du balai.

7. Bras (1) porte-balai selon l'une quelconque des revendications 1 à 4, **caractérisé en ce que**, lorsque le bras est en position de repos, la tige secondaire (40) est intégrée dans la largeur, et au moins partiellement dans la hauteur de la tige principale (10).

## Claims

1. A pantograph kinematics window wiper arm (1) including a main rod (10) carrying, on one of its ends side, a device (20) for coupling a windscreen wiper (30) and intended to be driven in an alternate rotation about a wiping axis by a driving shaft of a motor forming device, and a secondary rod (40) connected to the main rod by a linking mechanism (21) including a first hinge (11) at a hinge point of the main rod (10), and a second hinge (41) at a hinge point of the secondary rod (40) so as to enable a variation in the orientation of the windscreen wiper as a function of the angular position of said driving shaft, so that the coupling area (22) of the windscreen wiper (30) on the coupling device (20) is located between the hinge point of the main rod (10) and the hinge point of the secondary rod (40) so that, when the window wiper arm (1) is in stop position, the coupling device (20) and the windscreen wiper (30) are aligned along the axis of the main rod (10) **characterized in that** the main rod (10) has a shape and dimensions in height and in width such that, in said stop position, the assembly composed of the linking mechanism and the coupling device is integrated in the width and at least partially in the height of the main rod (10).

2. A window wiper arm (1) according to claim 1, **characterised in that** it includes a part of a type (12) forming a cover integrated in the end of the main rod (10) for receiving the linking mechanism (21) and the coupling device (20).

3. A window wiper arm (1) according to any one of the preceding claims, **characterized in that** the first hinge (11) and the second hinge (41) include two pins having axes parallel to each other and orthogonal to the axis of the main rod (10).

4. A window wiper arm (1) according to any one of claims 1 to 2, **characterised in that** the first hinge (11) includes a pin (13) having an axis orthogonal to the axis of the main rod (10), and **in that** the second hinge (41) includes a socket (14) having an axis orthogonal to the axis (13) of said pin.

5. A window wiper arm (1) according to claim 4, **characterised in that** the secondary rod (40) is positioned on the edge, along the main rod (10).

6. A window wiper blade (10) according to any one of claims 4 to 5, **characterised in that** it includes a system for correcting the angle of attack of the window wiper.

7. A window wiper arm (1) according to any one of claims 1 to 4, **characterized in that**, when the arm is in stop position, the secondary rod (40) is integrated in the width, and at least partially in the height of the main rod (10).

## Patentansprüche

1. Wischarm (1) mit Pantographenkinematik, der eine Hauptstange (10) umfasst, die an der Seite eines ihrer Enden eine Vorrichtung (20) zum Anhängen eines Scheibenwischers (30) trägt und dazu bestimmt ist, durch eine Antriebswelle einer Antriebsvorrichtung in alternierende Drehung um eine Wischachse versetzt zu werden, und eine sekundäre Stange (40), die durch einen Verbindungsmechanismus (21) mit der Hauptstange verbunden ist, der ein erstes Gelenk (11) auf einem Gelenkpunkt der Hauptstange (10) umfasst, und ein zweites Gelenk (41) auf einem Gelenkpunkt der sekundären Stange (40), so dass eine Variation der Ausrichtung des Scheibenwischers in Abhängigkeit von der Winkelposition der besagten Antriebswelle zugelassen wird, so dass sich die Anhängezone (22) des Scheibenwischers (30) auf der Vorrichtung (20) zum Anhängen zwischen dem Gelenkpunkt der Hauptstange (10) und dem Gelenkpunkt der sekundären Stange (40) befindet, so dass, wenn sich der Wischarm (1) in Ruheposition befindet, die Vorrichtung (20) zum Anhängen und der Scheibenwischer (30) in der Achse der Hauptstange (10) ausgefluchtet sind, **dadurch gekennzeichnet, dass** die Hauptstange (10) eine Form und solche Abmessungen in Höhe und Breite aufweist, dass in der besagten Ruheposition das aus dem Verbindungsmechanismus (21) und der Vorrichtung (20) zum Anhängen bestehende Ensemble in der Breite und zumindest teilweise in der Höhe der Hauptstange (10) integriert ist.

2. Wischarm (1) nach Anspruch 1, **dadurch gekennzeichnet, dass** er ein Formteil (12) umfasst, das eine Blende bildet, die in das Ende der Hauptstange (10) integriert ist, um den Verbindungsmechanismus (21) und die Vorrichtung (20) zum Anhängen abzudecken.

3. Wischarm (1) nach einem beliebigen der vorstehenden Ansprüche, **dadurch gekennzeichnet, dass** das erste Gelenk (11) und das zweite Gelenk (41) zwei Zapfen von zueinander parallelen und orthogonal zur Achse der Hauptstange (10) stehenden Achsen umfassen.

4. Wischarm (1) nach einem beliebigen der vorstehenden Ansprüche 1 bis 2, **dadurch gekennzeichnet, dass** das erste Gelenk (11) einen Achszapfen (13) orthogonal zur Achse der Hauptstange (10) umfasst, und **dadurch**, dass das zweite Gelenk (41) eine Achskugel (14) orthogonal zur Achse (13) des besagten Zapfens umfasst.

5. Wischarm (1) nach Anspruch 4, **dadurch gekennzeichnet, dass** die sekundäre Stange (40) auf der Kante entlang der Hauptstange (10) angeordnet ist.

6. Wischarm (1) nach einem beliebigen der vorstehenden Ansprüche 4 bis 5, **dadurch gekennzeichnet, dass** er ein System zur Korrektur des Anstellwinkels des Scheibenwischers umfasst.

7. Wischarm (1) nach einem beliebigen der vorstehenden Ansprüche 1 bis 4, **dadurch gekennzeichnet, dass** die sekundäre Stange (40), wenn der Arm in Ruhestellung ist, in der Breite und zumindest teilweise in der Höhe der Hauptstange (10) integriert ist.
